# EUROPEAN PATENT SPECIFICATION

(11) **EP 2 884 478 B1**
(45) Date of publication and mention of the grant of the patent: **26.10.2016**
(21) Application number: 14193117.0
(22) Date of filing: 13.11.2014
(51) Int. Cl.: G08G 5/00

(54) **System and method for textually and graphically presenting air traffic control voice information**
System und Verfahren zur textuellen und grafischen Darstellung von Flugverkehrskontroll-Sprachinformationen
Système et procédé pour présentation graphique et textuelle d'informations vocales de contrôle de trafic aérien

(30) Priority: 10.12.2013 US 201314101525
(43) Date of publication of application: 17.06.2015
(73) Proprietor: Honeywell International Inc., Morris Plains, NJ 07950 (US)
(72) Inventor: Kar, Satyanarayan, Morristown, New Jersey 07962-2245 (US); Krishna, Kiran Gopala, Morristown, New Jersey 07962-2245 (US); De Mers, Robert E., Morristown, New Jersey 07962-2245 (US); Agarwal, Jitender Kumar, Morristown, New Jersey 07962-2245 (US)
(74) Representative: Houghton, Mark Phillip

(56) References cited:
- US-A1- 2007 241 936
- US-A1- 2011 282 522
- US-A1- 2013 093 612
- US-A1- 2013 201 037

## Description

### TECHNICAL FIELD

The exemplary embodiments described herein generally relate to compliance with air traffic control (ATC) instructions and more particularly to the accurate receipt and display of ATC instructions.

### BACKGROUND

The most common cause of incidents in aviation is often associated with human errors, or mistakes. A considerable portion of those incidents can be ascribed to a pilot's involvement in an assortment of simultaneous high workload tasks. With the growth in aviation traffic, one may estimate that these incidents will increase.

Patent document number US2011/282522A1 describes a system for converting audible air traffic control instructions for pilots operating from an air facility to textual format. The system comprises a processor connected to a jack of the standard pilot headset and a separate portable display screen connected to the processor. The processor has a language converting functionality which can recognize traffic control nomenclature and display messages accordingly. Displayed text is limited to information intended for a specific aircraft. The display may show hazardous discrepancies between authorized altitudes and headings and actual altitudes and headings. The display may be capable of correction by the user, and may utilize Global Positioning System (GPS) to obtain appropriate corrections. The system may date and time stamp communications and hold the same in memory. The system may have computer style user functions such as scrollability and operating prompts.

Patent document number US2007/241936A1 describes a system for multi-modal cockpit interface during surface operation of an aircraft which comprises a head tracking device, a processing element, and a full-color head worn display. The processing element is configured to receive head position information from the head tracking device, to receive current location information of the aircraft, and to render a virtual airport scene corresponding to the head position information and the current aircraft location. The full-color head worn display is configured to receive the virtual airport scene from the processing element and to display the virtual airport scene. The current location information may be received from one of a global positioning system or an inertial navigation system.

Pilots often miss the longer ATC messages or pick up the wrong data, for example, a required altitude or heading, for the messages. Also it is stressful for pilot to memorize the complete message and comply with it. Two types of errors have been identified when pilots are required to capture important elements of an audible ATC clearance that is transmitted only once without the opportunity to read back or ask for clarification. These errors include:
Errors of Omission: Omitted information, for example, an airway is transmitted in the clearance but is not copied down by the pilot; and
Errors of Commission: For example, the abbreviation VOR, for VHF omnidirectional radio range, was written down but the name of the VOR was not.

Electronic instrumentation displays continue to advance in sophistication, achieving increasingly higher levels of information density and, consequently, presenting a greater amount of visual information to be perceived and understood by the operator, e.g., the pilot. It is important that visual displays provide a proper cognitive mapping between what the operator is trying to achieve and the information available to accomplish the task.

Data driven charts (DDC) have a powerful ability to integrate chart information with aircraft position and flight management system (FMS) procedural routing. This is a very crisp and concise way of presenting information. However, integration of accurate ATC instructions with DDC, and other information displays such as moving maps and electronic charts, is lacking.

Accordingly, it is desirable to provide a system and method for reducing or preventing errors in receiving, recording, and interpreting instructions such as ATC clearances. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

The present invention in its various aspects is as set out in the appended claims. A system and method are described that advocates usage of a speech interface that can recognize ATC commands/messages and present the information to the pilot in a way which increases the likelihood the pilot understands and executes the ATC command as given.

In an exemplary embodiment, a method for presenting received voice information to a pilot of an aircraft flying a route, comprises converting the voice information to a first text; identifying a first portion of the first text as pertaining to at least one action to be performed; identifying a second portion of the first text as pertaining to data relating to the at least one action; determining a first format for the first portion of the first text; determining a second format for the second portion of the first text; and displaying the first text including the first and second formats.

In another exemplary embodiment, a method for presenting received voice information to a pilot of an aircraft flying a route, comprises converting the voice information to first text; assigning a first format for a first portion of the first text pertaining to an action to be performed; assigning a second format for a second portion of the first text pertaining to data relating to the action; displaying the first text including the first and second formats.

In yet another exemplary embodiment, a system for presenting received voice information to a pilot of an aircraft flying a route, comprises a converter configured to convert the voice information to first text; a processor configured to identify a first portion of the first text as words instructing an action to be performed; identify a second portion of the first text as words of data relating to the first portion; determine a first format for the first portion of the first text; determine a second format for the second portion of the first text; determine if the first text is to be displayed immediately; if not to be displayed immediately, determine when the first text is to be displayed based on the action, data, and a position of the aircraft on the route; and a display configured to display the first text including the first portion in the first format and the second portion in the second format.

### BRIEF DESCRIPTION OF THE DRAWINGS

The present invention will hereinafter be described in conjunction with the following drawing figures, wherein like numerals denote like elements, and
FIG. 1 is a block diagram of a system suitable for use in an aircraft in accordance with the exemplary embodiments described herein;
FIG. 2 is a flow diagram of an exemplary method suitable for use with the system of FIG. 1 in accordance with the exemplary embodiments;
FIG. 3 is a first example of an ATC clearance processed by the exemplary embodiments described herein;
FIGS. 4-7 illustrate a second example of an ATC clearance processed by the exemplary embodiments described herein;
FIG. 8 is a third example of an ATC clearance processed by the exemplary embodiments described herein; and
FIGS. 9-11 illustrate a fourth example of an ATC clearance processed by the exemplary embodiments described herein.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While the exemplary embodiments described herein refer to displaying the information on aircraft, the invention may also be applied to other vehicle display systems such as displays used by off-site controllers, e.g., ground controllers.

The mapping methods described herein may be used with a variety of aircraft, such as planes and helicopters, and maritime craft. The aviation environment is described herein as the exemplary embodiment and may include navigation from point to point or approach and landing at an airport. Generally a lateral view display is presented in conjunction with the vertical view presented herein. Various types of maps may be used for display on the lateral view, for example, road maps, terrain maps, aviation maps, and topographical maps.

Some applications may require more than one monitor, for example, a head down display screen, to accomplish the mission. These monitors may include a two dimensional moving map display and a three dimensional perspective display. A moving map display may include a top-down view of the aircraft, the flight plan, and the surrounding environment. Various symbols are utilized to denote navigational cues, for example, waypoint symbols, line segments interconnecting the waypoint symbols, and range rings, and nearby environmental features, for example, terrain, weather conditions, and political boundaries.

Alternate embodiments of the present invention to those described below may utilize whatever navigation system signals are available, for example a ground based navigational system, a GPS navigation aid, a flight management system, and an inertial navigation system, to dynamically calibrate and determine a precise course.

In accordance with the exemplary embodiments, a system and method are described that advocates usage of a speech interface that can recognize the ATC commands/messages and present the information to the pilot in a way which increases the likelihood the pilot understands and executes the ATC command as given. The ATC command is converted into text, which is analyzed wherein intent wording (a first portion) and data (a second portion) are identified. The intent wording and data are displayed in a textual format, in different recognizable formats, and may be included on a map of the aircraft route. Furthermore, a read back of the instructions by the pilot to ATC may be analyzed and compared with the ATC command. If the comparison is faulty, the formats of the intent wording and/or data may be modified further to alert the pilot of the discrepancy.

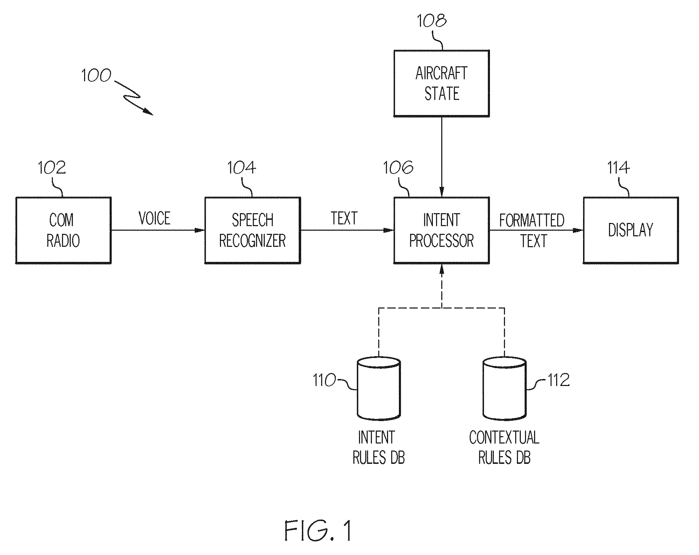

Referring to FIG. 1, a block diagram of the ATC contextual smart briefer 100 comprises a radio 102, a speech recognizer 104, an intent processor 106, an aircraft state determiner 108, an ATC intent/data rules database 110, a contextual rule database 112, and a display device 114. Several of the above blocks illustrated in FIG. 1 may comprise the same physical device, or processor, and the ATC intent/data rules database 110 and the contextual rule database 112 may comprise one database.

It should be understood that FIG. 1 is a simplified representation of a display system 100 for purposes of explanation and ease of description, and FIG. 1 is not intended to limit the application or scope of the subject matter in any way. In practice, the display system 100 and/or aircraft 108 will include numerous other devices and components for providing additional functions and features, as will be appreciated in the art.

The radio 102 may comprise any type of known radio or as developed in the future and may operate at any frequency. The radio is configured to receive ATC instructions, and in at least one exemplary embodiment may also transmit pilot transmissions back to ATC. The ATC instructions are provided by the radio as voice to the speech recognizer 104, which converts the voice to text. The text from the speech recognizer 104 is provided to the intent processor 106 which accesses the aircraft state 108, the ATC intent/data rules database 110, and the contextual rule database 112, to extract the intent text (words directing an action to be taken) and data which is preferably formatted differently for display on the display 114.

A single processor may be used to perform the functions of the speech recognizer 104, the intent processor 106, and the aircraft state 108, and may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

The display 114 is configured to provide images to the operator. In accordance with an exemplary embodiment, the display 114 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display 114 may additionally be implemented as a panel mounted display, a HUD (head-up display) projection, or any one of numerous known technologies. It is additionally noted that the display 114 may be configured as any one of numerous types of aircraft flight deck displays. For example, it may be configured as a multi-function display, a horizontal situation indicator, or a vertical situation indicator. In the depicted embodiment, however, the display 114 is configured as a primary flight display (PFD).

In operation, the aircraft state 108 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display 114 is suitably designed to process data obtained from the sources of flight status data in the manner described in more detail herein.

During the course of this description, like numbers may be used to identify like elements according to the different figures that illustrate the various exemplary embodiments.

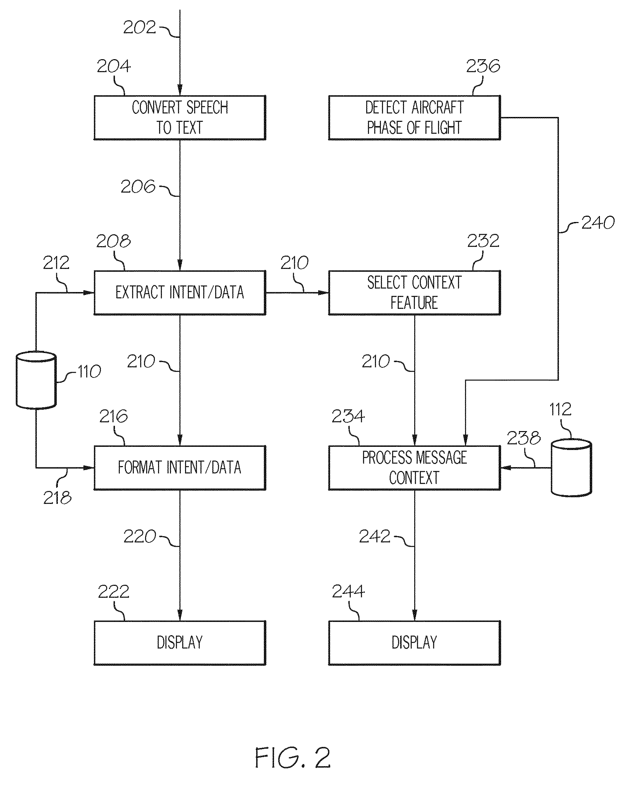

FIG. 2 is a flow chart that illustrates an exemplary embodiment of a method 200 suitable for use with the system 100. Method 200 represents one implementation of a method for converting voice to text, analyzing, and displaying ATC instructions on an onboard display of an aircraft. The various tasks performed in connection with method 200 may be performed by software, hardware, firmware, or any combination thereof. For illustrative purposes, the following description of method 200 may refer to elements mentioned above in connection with FIG. 1. In practice, portions of method 200 may be performed by different elements of the described system, e.g., a processor and a display. It should be appreciated that method 200 may include any number of additional or alternative tasks, the tasks shown in FIG. 2 need not be performed in the illustrated order, and method 200 may be incorporated into a more comprehensive procedure or method having additional functionality not described in detail herein. Moreover, one or more of the tasks shown in FIG. 2 could be omitted from an embodiment of the method 200 as long as the intended overall functionality remains intact.

In accordance with the exemplary method 200 of FIG. 2, an ATC voice (command/instruction) 202 received on the radio 102 is converted 204 by the speech recognizer 104 from voice 202 to text 206. The intent words (words requiring action) and data 210 are then extracted 206 by the intent processor 106 from the text 206 in accordance with intent/data analyzer rules 212 acquired from the intent/data rules database 214. The intent/data rules 212 describe the method to translate the text to semantic rules which allows for distinguishing the intent words and their associated data. A format is then assigned 216 to each of the intent words and data 210 in accordance with intent/data highlighter rules 218 acquired from the intent/data rules database 110. The formatted intent words and data 220 are then displayed 222 on the display 114. The format for each of the intent words and data are not to be limited, but may assume for example, highlighted text, colors, various levels of brightness, and special type font.

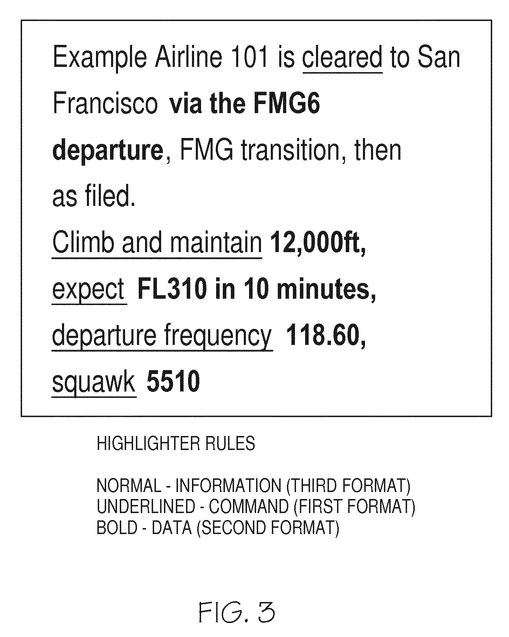

FIG. 3 illustrates one example of how ATC instructions are processed. When a voice message 202 comprising:
"Example airline 101 is cleared to San Francisco via the FMG6 departure, FGM transition, then as filed. Climb and maintain 12,000 feet, expect FL310 in 10 minutes, departure frequency 118.60, squawk 5510."
is received, the intent (command) words and the data are determined. This example of FIG. 3 provides three different formats, where the intent words are in a first format (underlined in this example), data is in a second format (bold type), while remaining words optionally may be in a third format (normal type).

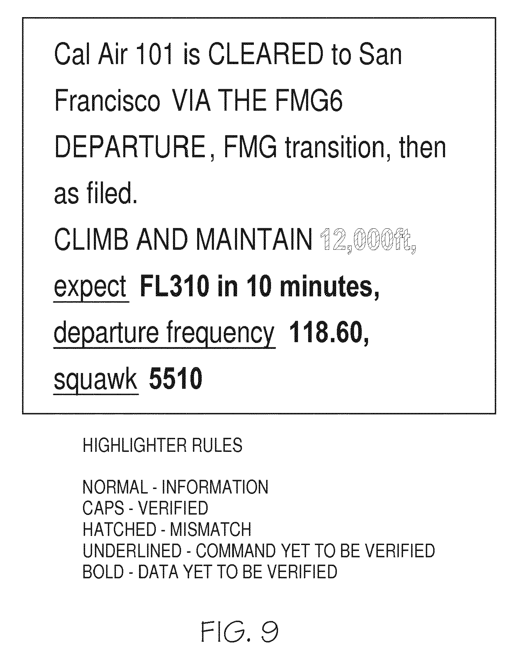

Yet another exemplary embodiment (FIG. 9) comprises a reply from the pilot to ATC confirming the instructions. The reply is formatted similarly to the instructions from ATC; however, any misstatement/inaccuracy in the reply from the pilot that is different (does not compare) from the ATC message is highlighted in a yet different format, for example amber, or in this case included within a hatched box, that alerts the pilot to the misstatement/inaccuracy.

Referring again to FIG. 2 and in accordance with another exemplary embodiment, the intent words and data 210 when selected 232 are then processed 234 for message content in consideration of a detected 236 aircraft phase of flight 240 by the aircraft state 108 and in accordance with context trigger rules 238 acquired from the context rules database 112. Contextual formatted text 242 is then displayed 244 on the display 114.

Since memorizing multiple sub tasks in a long ATC command is a difficult task, the sub tasks in the instructions as heard from the ATC may be queued and the specific messages which are yet to be executed may be displayed at the time of the event.

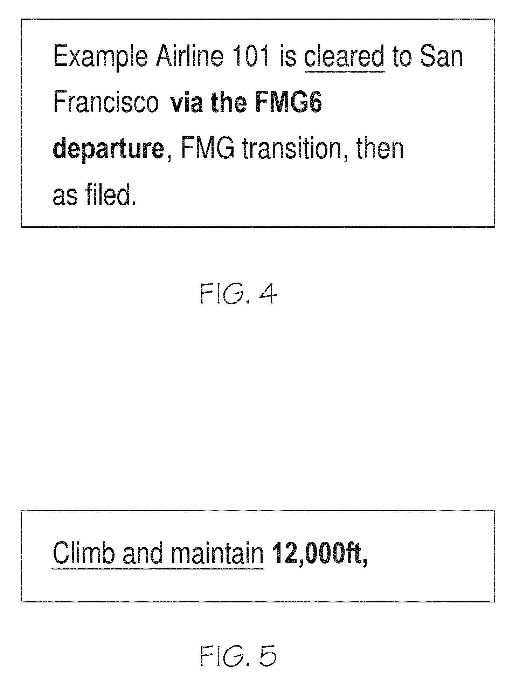

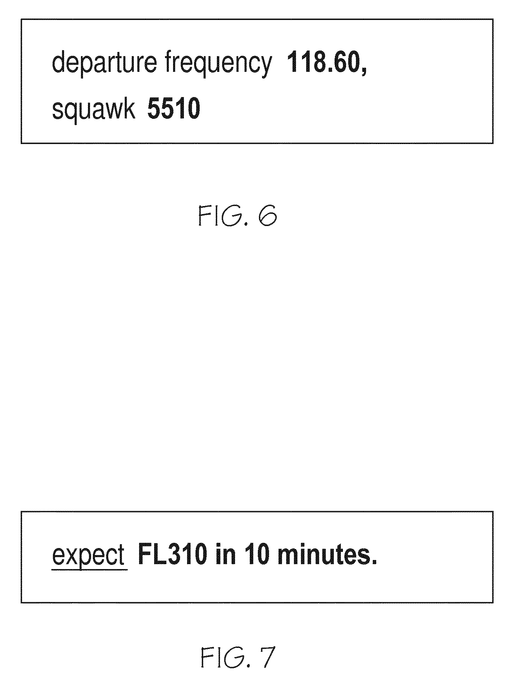

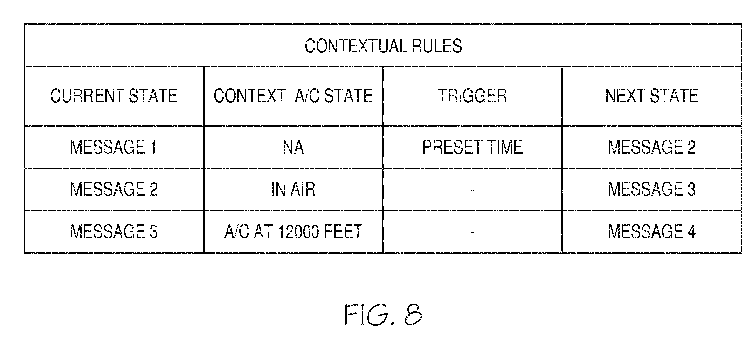

FIG. 4-7 illustrate this contextual example of FIG. 2 wherein portions of the same voice message are displayed at appropriate times as determined in the process message context step 234. The first portion of the message in FIG. 4 may be displayed prior to takeoff, while the second portion in FIG. 5 may be displayed immediately after takeoff. The third portion in FIG. 6 may be displayed when reaching a defined altitude, and the fourth portion in FIG. 7 may be displayed when reaching a point in the departure route (See FIG. 8). These stated locations of the aircraft for triggering the display of the four portions shown in FIGS. 4-8 are examples. Portions of a message could be displayed any one of various points in the sortie.

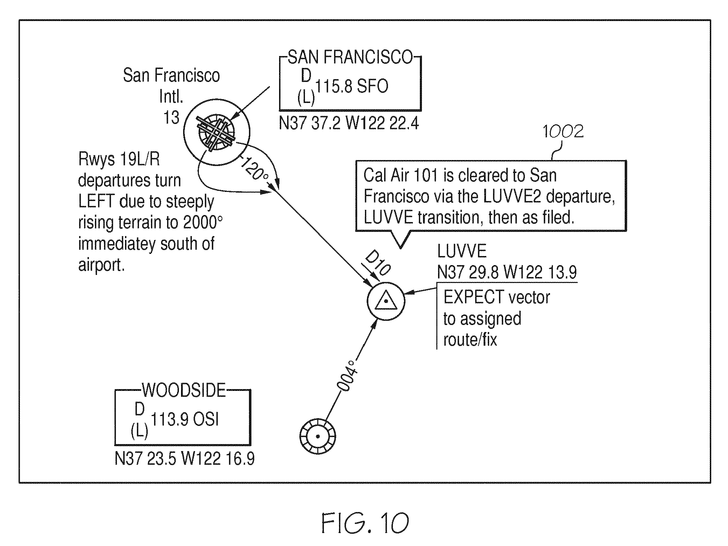

In yet another exemplary embodiment of FIGS. 10-12, the ATC instructions may be displayed on a chart showing the route the aircraft is to fly. The message comprises, for example:
Example airline 101 is cleared to San Francisco via the LUVVE2 departure, LUVVE transition, then as filed. Climb and maintain 12,000ft, expect FL310 in 10 minutes, departure frequency 113.90, squawk 5510

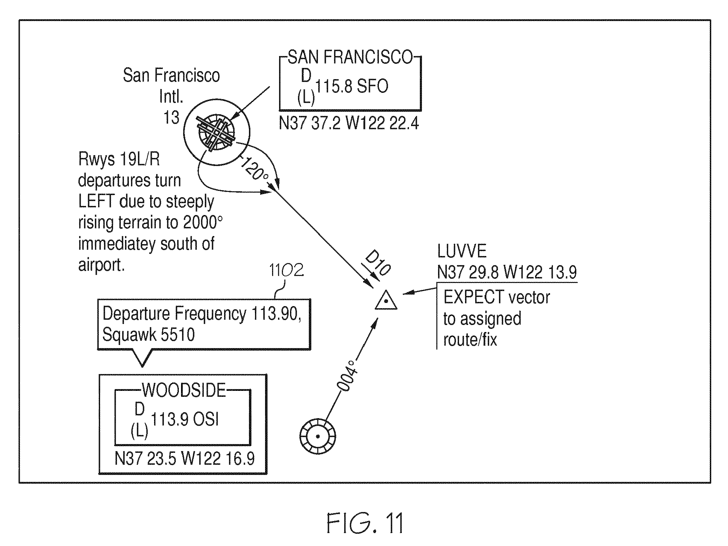

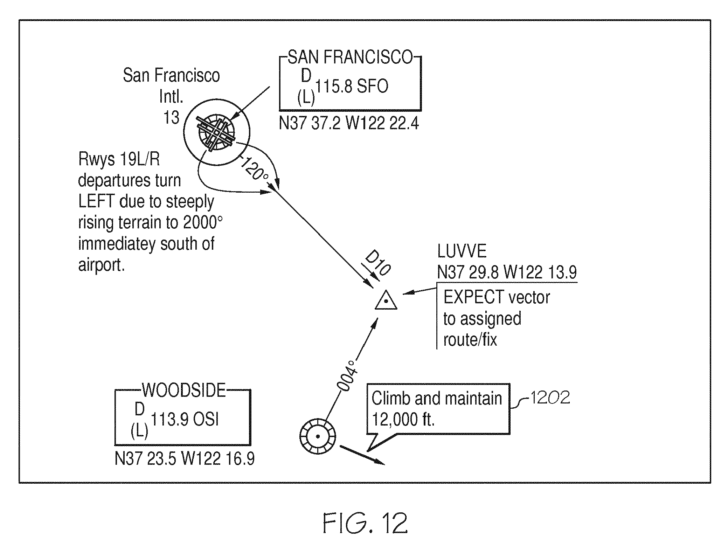

The chart of FIG. 10 would be displayed, for example, prior to takeoff. A first portion 1002 (Example airline 101 is cleared to San Francisco via the LUVVE2 departure, LUVVE transition, then as filed) of the ATC instructions would be displayed, preferably in a format different from the rest of the chart. Then, when the flight phase is determined 236 to be, for example, approaching the Woodside navigation fix, the chart is displayed as shown in FIG. 11 including a second portion 1102 of the ATC instructions (departure frequency 113.90, squawk 5510) in the different format. A third portion 1202 (climb and maintain 12,000ft) shown in FIG. 12 of the instructions may be displayed, for example, when departing the Woodside navigational fix.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for presenting received voice information to a pilot of an aircraft flying a route, comprising:
converting, at a speech recognizer (104), the voice information to a first text;
analyzing the first text to (a) identify intent words as action words, and as a first portion of the first text and (b) identify associated data as a second portion of the first text;
distinguishing, by an intent processor (106), an intent word and its associated data in the first text and performing the steps of:
(i) extracting the intent word;
(ii) formatting the intent word in a first format;
(iii) extracting the associated data;
(iv) formatting the associated data in a second format different from the first format;
and displaying, on a display (114), the first text including displaying the intent word in the first format and displaying the associated data in the second format.

2. The method of claim 1 further comprising:
processing the intent word and its associated data to determine an associated action;
determining when the first text is to be displayed based on the associated action, data, and a location of the aircraft on the route.

3. The method of claim 1 further comprising:
displaying the intent word and associated data on a chart including a route of the aircraft.

4. The method of claim 3 further comprising:
processing the first text to determine an action required by the intent word and its associated data;
determining when the first text is to be displayed based on the action, and a location of the aircraft on the route.

5. The method of claim 2, wherein the first portion comprises a plurality of intent words, and the second portion comprises a plurality of associated data, wherein each intent word and associated data are further associated with a respective plurality of actions, the method further comprising:
determining a plurality of phases of flight of a planned route of the aircraft; and
displaying, for each action of the plurality of actions, the respective intent word and its associated data at a pertinent phase of flight.

6. The method of claim 1 further comprising:
converting a voice reply by the pilot to a second text;
comparing the second text with the first text; and
modifying the format of the second text in response to the comparison of the second text with the first text.

7. A system for presenting received voice information to a pilot of an aircraft flying a route, comprising:
a speech recognizer (104) configured to convert the voice information to first text;
an intent processor (106) configured to:
analyze the first text to (a) identify intent words as action words, and as a first portion of the first text, and (b) identify associated data as a second portion of the first text;
distinguish an intent word and its associated data in the first text and perform the steps of:
(i) extracting the intent word;
(ii) formatting the intent word in a first format;
(iii) extracting the associated data;
(iv) formatting the associated data in a second format different from the first format;
determine if the first text is to be displayed immediately;
if not to be displayed immediately, determine when the first text is to be displayed based on processing the intent word, associated data, and a position of the aircraft on the route; and
a display (114) configured to:
display the first text including displaying the intent word in the first format and displaying the associated data in the second format.

8. The system of claim 7 wherein the intent processor is further configured to:
determine when the first text is to be displayed based on the associated action, data, and an aircraft phase of flight.

9. The system of claim 7 wherein the intent processor is further configured to:
display the first text, including displaying the intent word in the first format and the associated data in the second format, on a chart including a route of the aircraft.

10. The system of claim 9 wherein the intent processor is further configured to:
determine when the first text is to be displayed based on the an action, associated data, and a location of the aircraft on the route.

11. The system of claim 7, wherein the first portion comprises a plurality of intent words, and a second portion comprises a plurality of respectively associated data, wherein each intent word and associated data are further associated with a respective plurality of actions, and wherein the intent processor is further configured to:
determine a plurality of phases of flight of the a planned route of the aircraft; and
display, for each of the plurality of actions, the respective intent word and its associated data at a pertinent phase of flight.

12. The system of claim 7, wherein the intent processor is further configured to:
convert a voice reply by the pilot to a second text;
compare the second text with the first text; and
modify the format of the second text in response to the comparison of the second text with the first text.

## Patentansprüche

1. Verfahren zum Präsentieren empfangener Sprachinformationen für einen Piloten eines Luftfahrzeugs, das eine Route fliegt, umfassend:
Umwandeln, in einer Spracherkennungsvorrichtung (104), der Sprachinformationen in einen ersten Text;
Analysieren des ersten Texts, um (a) Absichtswörter als Aktionswörter und als einen ersten Abschnitt des ersten Texts zu identifizieren und (b) assoziierte Daten als einen zweiten Abschnitt des ersten Texts zu identifizieren;
Unterscheiden, durch eine Absichtsverarbeitungsvorrichtung (106), eines Absichtsworts und seiner assoziierten Daten in dem ersten Text und Durchführen der folgenden Schritte:
(i) Extrahieren des Absichtsworts;
(ii) Formatieren des Absichtsworts in einem ersten Format;
(iii) Extrahieren der assoziierten Daten;
(iv) Formatieren der assoziierten Daten in einem zweiten Format, das vom ersten Format verschieden ist;
und Anzeigen, auf einer Anzeige (114), des ersten Texts, enthaltend, das Absichtswort in dem ersten Format anzuzeigen und die assoziierten Daten in dem zweiten Format anzuzeigen.

2. Verfahren nach Anspruch 1, ferner umfassend:
Verarbeiten des Absichtsworts und seiner assoziierten Daten, um eine assoziierte Aktion zu bestimmen;
Bestimmen, wann der erste Text anzuzeigen ist, basierend auf der assoziierten Aktion, den Daten und eines Orts des Luftfahrzeugs auf der Route.

3. Verfahren nach Anspruch 1, ferner umfassend:
Anzeigen des Absichtsworts und der assoziierten Daten auf einem Diagramm, das eine Route des Luftfahrzeugs enthält.

4. Verfahren nach Anspruch 3, ferner umfassend:
Verarbeiten des ersten Texts, um eine Aktion zu bestimmen, die von dem Absichtswort und seiner assoziierten Daten verlangt wird;
Bestimmen, wann der erste Text anzuzeigen ist, basierend auf der Aktion und einem Ort des Luftfahrzeugs auf der Route.

5. Verfahren nach Anspruch 2, wobei der erste Abschnitt eine Vielzahl von Absichtswörtern umfasst und der zweite Abschnitt eine Vielzahl assoziierter Daten umfasst, wobei jedes Absichtswort und assoziierte Daten ferner mit einer jeweiligen Vielzahl von Aktionen assoziiert sind, das Verfahren ferner umfassend:
Bestimmen einer Vielzahl von Flugphasen einer geplanten Route des Luftfahrzeugs; und
Anzeigen, für jede Aktion der Vielzahl von Aktionen, des jeweiligen Absichtsworts und seiner assoziierten Daten bei einer angemessenen Flugphase.

6. Verfahren nach Anspruch 1, ferner umfassend:
Umwandeln einer Sprachantwort von dem Piloten in einen zweiten Text;
Vergleichen des zweiten Texts mit dem ersten Text; und
Modifizieren des Formats des zweiten Texts als Reaktion auf den Vergleich des zweiten Texts mit dem ersten Text.

7. System zum Präsentieren empfangener Sprachinformationen für einen Piloten eines Luftfahrzeugs, das eine Route fliegt, umfassend:
eine Spracherkennungsvorrichtung (104), konfiguriert zum Umwandeln der Sprachinformationen in ersten Text;
eine Absichtsverarbeitungsvorrichtung (106), konfiguriert zum:
Analysieren des ersten Texts, um (a) Absichtswörter als Aktionswörter und als einen ersten Abschnitt des ersten Texts zu identifizieren und (b) assoziierte Daten als einen zweiten Abschnitt des ersten Texts zu identifizieren;
Unterscheiden eines Absichtsworts und seiner assoziierten Daten in dem ersten Text und Durchführen der folgenden Schritte:
(i) Extrahieren des Absichtsworts;
(ii) Formatieren des Absichtsworts in einem ersten Format;
(iii) Extrahieren der assoziierten Daten;
(iv) Formatieren der assoziierten Daten in einem zweiten Format, das vom ersten Format verschieden ist;
Bestimmen, ob der erste Text unverzüglich anzuzeigen ist;
wenn er nicht unverzüglich anzuzeigen ist, Bestimmen, wann der erste Text anzuzeigen ist, basierend auf Verarbeiten des Absichtsworts, assoziierter Daten und einer Position des Luftfahrzeugs auf der Route; und
eine Anzeige (114), konfiguriert zum:
Anzeigen des ersten Texts, enthaltend, das Absichtswort in dem ersten Format anzuzeigen und die assoziierten Daten in dem zweiten Format anzuzeigen.

8. System nach Anspruch 7, wobei die Absichtsverarbeitungsvorrichtung ferner konfiguriert ist zum:
Bestimmen, wann der erste Text anzuzeigen ist, basierend auf der assoziierten Aktion, den Daten und einer Flugphase des Luftfahrzeugs.

9. System nach Anspruch 7, wobei die Absichtsverarbeitungsvorrichtung ferner konfiguriert ist zum:
Anzeigen des ersten Texts, enthaltend, das Absichtswort in dem ersten Format anzuzeigen und die assoziierten Daten in dem zweiten Format anzuzeigen, auf einem Diagramm, das eine Route des Luftfahrzeugs enthält.

10. System nach Anspruch 9, wobei die Absichtsverarbeitungsvorrichtung ferner konfiguriert ist zum:
Bestimmen, wann der erste Text anzuzeigen ist, basierend auf einer Aktion, assoziierten Daten und einem Ort des Luftfahrzeugs auf der Route.

11. System nach Anspruch 7, wobei der erste Abschnitt eine Vielzahl von Absichtswörtern umfasst und ein zweiter Abschnitt eine Vielzahl jeweilig assoziierter Daten umfasst, wobei jedes Absichtswort und assoziierte Daten ferner mit einer jeweiligen Vielzahl von Aktionen assoziiert sind und wobei die Absichtsverarbeitungsvorrichtung ferner konfiguriert ist zum:
Bestimmen einer Vielzahl von Flugphasen der geplanten Route des Luftfahrzeugs; und
Anzeigen, für jede der Vielzahl von Aktionen, des jeweiligen Absichtsworts und seiner assoziierten Daten bei einer angemessenen Flugphase.

12. System nach Anspruch 7, wobei die Absichtsverarbeitungsvorrichtung ferner konfiguriert ist zum:
Umwandeln einer Sprachantwort von dem Piloten in einen zweiten Text;
Vergleichen des zweiten Texts mit dem ersten Text; und
Modifizieren des Formats des zweiten Texts als Reaktion auf den Vergleich des zweiten Texts mit dem ersten Text.

## Revendications

1. Procédé pour présenter des informations vocales reçues à un pilote d'un aéronef en vol le long d'un itinéraire, comprenant :
convertir, au niveau d'un dispositif de reconnaissance vocale (104), les informations vocales en un premier texte ;
analyser le premier texte pour (a) identifier des mots d'intention comme étant des mots d'action, et comme étant une première partie du premier texte et (b) identifier des données associées comme étant une deuxième partie du premier texte ;
distinguer, au moyen d'un processeur d'intention (106), un mot d'intention et les données qui lui sont associées dans le premier texte et effectuer les étapes consistant à :
(i) extraire le mot d'intention ;
(ii) formater le mot d'intention dans un premier format ;
(iii) extraire les données associées ;
(iv) formater les données associées dans un deuxième format différent du premier format ;
et afficher, sur un dispositif d'affichage (114), le premier texte, cela consistant à afficher le mot d'intention dans le premier format et à afficher les données associées dans le deuxième format.

2. Procédé selon la revendication 1 comprenant en outre :
traiter le mot d'intention et les données qui lui sont associées afin de déterminer une action associée ;
déterminer les instants où le premier texte doit être affiché sur la base de l'action associée, de données, et d'une position de l'aéronef sur l'itinéraire.

3. Procédé selon la revendication 1, comprenant en outre :
afficher le mot d'intention et les données associées sur un graphique comprenant un itinéraire de l'aéronef.

4. Procédé selon la revendication 3, comprenant en outre :
traiter le premier texte afin de déterminer une action requise par le mot d'intention et les données qui lui sont associées ;
déterminer les instants où le premier texte doit être affiché sur la base de l'action, et d'une position de l'aéronef sur l'itinéraire.

5. Procédé selon la revendication 2, dans lequel la première partie comprend une pluralité de mots d'intention, et la deuxième partie comprend une pluralité de données associées, dans lequel chaque mot d'intention et les données associées sont en outre associés à une pluralité respective d'actions, le procédé comprenant en outre :
déterminer une pluralité de phases de vol d'un itinéraire planifié de l'aéronef ; et
afficher, pour chaque action de la pluralité d'actions, le mot d'intention respectif et les données qui lui sont associées au niveau d'une phase de vol pertinente.

6. Procédé selon la revendication 1, comprenant en outre :
convertir une réponse vocale fournie par le pilote en un deuxième texte ;
comparer le deuxième texte au premier texte ; et
modifier le format du deuxième texte en réponse à la comparaison du deuxième texte au premier texte.

7. Système pour présenter des informations vocales reçues à un pilote d'un aéronef en vol le long d'un itinéraire, comprenant :
un dispositif de reconnaissance vocale (104) configuré pour convertir les informations vocales en un premier texte ;
un processeur d'intention (106) configuré pour :
analyser le premier texte pour (a) identifier des mots d'intention comme étant des mots d'action, et comme étant une première partie du premier texte, et (b) identifier des données associées comme étant une deuxième partie du premier texte ;
distinguer un mot d'intention et les données qui lui sont associées dans le premier texte et exécuter les étapes consistant à :
(i) extraire le mot d'intention ;
(ii) formater le mot d'intention dans un premier format ;
(iii) extraire les données associées ;
(iv) formater les données associées dans un deuxième format différent du premier format ;
déterminer si le premier texte doit être affiché immédiatement ;
s'il ne doit pas être affiché immédiatement, déterminer les instants où le premier texte doit être affiché sur la base du traitement du mot d'intention, de données associées, et d'une position de l'aéronef sur l'itinéraire ; et
un dispositif d'affichage (114) configuré pour :
afficher le premier texte, cela consistant à afficher le mot d'intention dans le premier format et à afficher les données associées dans le deuxième format.

8. Système selon la revendication 7, dans lequel le processeur d'intention est en outre configuré pour :
déterminer les instants où le premier texte doit être affiché sur la base de l'action associée, de données, et d'une phase de vol de l'aéronef.

9. Système selon la revendication 7, dans lequel le processeur d'intention est en outre configuré pour :
afficher le premier texte, cela consistant à afficher le mot d'intention dans le premier format et les données associées dans le deuxième format, sur un graphique comprenant un itinéraire de l'aéronef.

10. Système selon la revendication 9, dans lequel le processeur d'intention est en outre configuré pour :
déterminer les instants où le premier texte doit être affiché sur la base d'une action, de données associées, et d'une position de l'aéronef sur l'itinéraire.

11. Système selon la revendication 7, dans lequel la première partie comprend une pluralité de mots d'intention, et une deuxième partie comprend une pluralité de données respectivement associées, dans lequel chaque mot d'intention et les données associées sont en outre associés à une pluralité respective d'actions, et dans lequel le processeur d'intention est en outre configuré pour :
déterminer une pluralité de phases de vol d'un itinéraire planifié de l'aéronef ; et
afficher, pour chacune de la pluralité d'actions, le mot d'intention respectif et les données qui lui sont associées au niveau d'une phase de vol pertinente.

12. Système selon la revendication 7, dans lequel le processeur d'intention est en outre configuré pour :
convertir une réponse vocale fournie par le pilote en un deuxième texte ;
comparer le deuxième texte au premier texte ; et
modifier le format du deuxième texte en réponse à la comparaison du deuxième texte au premier texte.
